# EUROPEAN PATENT APPLICATION

(11) **EP 4 332 514 A1**
(43) Date of publication of application: **06.03.2024**
(21) Application number: 22847822.8
(22) Date of filing: 28.02.2022
(51) Int. Cl.: G01D 11/30

(54) **CONTROL METHOD AND SYSTEM FOR VEHICLE SENSOR, AND VEHICLE**

(30) Priority: 30.07.2021 CN 202110874657
(71) Applicant: Ningbo Lotus Robotics Co., Ltd., Ningbo, Zhejiang 315336 (CN)
(72) Inventor: ZHANG, Cheng, Wuhan, Hubei 430056 (CN); LI, Bo, Wuhan, Hubei 430056 (CN)
(74) Representative: 2K Patentanwälte Blasberg Kewitz & Reichel
(86) International application number: PCT/CN2022/078300
(87) International publication number: WO 2023/005202

(57) **Abstract**

The present invention provides a vehicle sensor control method and system and a vehicle, and specifically relates to the field of vehicle technologies. The method includes: obtaining vehicle driving information, where the vehicle driving information includes at least vehicle driving environment information; decomposing the vehicle driving environment information into grid space, and determining a target grid based on the grid space; and obtaining a perception capability of a vehicle sensor for the grid space, adjusting the vehicle sensor based on the obtained perception capability, and controlling the target grid to be within a coverage area of the vehicle sensor. In the present invention, an angle adjustment and/or a position adjustment are or is performed on the sensor, so that mobility of the vehicle sensor can be improved, and an original coverage angle and coverage area thereof can be changed, thereby resolving a problem in the conventional technology that a coverage capability of the vehicle sensor is limited in an autonomous driving vehicle due to a fixed arrangement of the vehicle sensor.

## Description

### TECHNICAL FIELD

The present invention relates to the field of vehicle technologies, and in particular, to a vehicle sensor control method and system, and a vehicle.

### BACKGROUND

Autonomous driving, also referred to as self-driving, uses an in-vehicle control system to implement self-driving of cars. Autonomous driving mainly relies on cooperation between artificial intelligence, visual computing, a radar, a sensor monitoring apparatus, and a global positioning system, so that the in-vehicle control system can automatically and safely run a motor vehicle without any active human operation. However, nowadays a vehicle sensor in an autonomous driving car is disposed at a fixed position and cannot perceive environment information in a perception area that cannot be covered in a preset arrangement, and therefore, a coverage capability of the vehicle sensor is limited due to the fixed arrangement thereof.

### SUMMARY

In view of the foregoing disadvantages in the conventional technology, the present invention is intended to provide a method and a system for controlling a vehicle sensor of an autonomous driving vehicle, to resolve a problem in the conventional technology that a coverage capability of the vehicle sensor is limited when it is fixedly arranged.

To achieve the foregoing objective and other related objectives, the present invention provides a vehicle sensor control method. The method includes the following steps:
obtaining vehicle driving information, where the vehicle driving information includes at least vehicle driving environment information;
decomposing the vehicle driving environment information into grid space, and determining a target grid based on the grid space; and
obtaining a perception capability of a vehicle sensor for the grid space, adjusting the vehicle sensor based on the obtained perception capability, and controlling the target grid to be within a coverage area of the vehicle sensor.

In an embodiment of the present invention, the vehicle driving information further includes vehicle positioning information, and a process of determining the vehicle driving environment information includes:
obtaining the vehicle positioning information;
generating a vehicle driving trajectory based on the vehicle positioning information; and
obtaining corresponding map data, and determining the vehicle driving environment information based on the map data and the vehicle driving trajectory.

In an embodiment of the present invention, a process of determining the target grid based on the grid space includes:
obtaining a driving direction of a current vehicle after the vehicle driving environment information is decomposed into the grid space, and obtaining a traffic flow formed when another vehicle approaches the current vehicle;
determining a risk source direction of the current vehicle based on the traffic flow and the driving direction of the current vehicle;
predicting a probability that the another vehicle collides with the current vehicle and a corresponding collision area based on the risk source direction; and
selecting, from the grid space, a grid corresponding to the predicted collision area as the target grid.

In an embodiment of the present invention, the adjustment to the vehicle sensor includes an angle adjustment and/or a position adjustment.

In an embodiment of the present invention, when performing the position adjustment on the vehicle sensor, the method includes: moving the vehicle sensor up or down, moving the vehicle sensor left or right, and/or moving the vehicle sensor forward or backward, to adjust an original spatial position of the vehicle sensor and a corresponding coverage area thereof; and

when performing the angle adjustment on the vehicle sensor, the method includes: performing a clockwise or counterclockwise rotation on the vehicle sensor to adjust an original angle and a corresponding coverage area thereof.

In an embodiment of the present invention, when obtaining the vehicle driving information, the method further includes: obtaining a vehicle function on/off state, and turning on or off one or more vehicle sensors disposed at different positions of a vehicle based on a result of the vehicle function on/off state; wherein the vehicle function includes at least one of the following: an autonomous driving function, an assisted driving function, a lane changing function, a steering function, and a cruise control function.

In an embodiment of the present invention, the method further includes:
disposing one or more vehicle sensors on a front side of the vehicle; and/or
disposing one or more vehicle sensors on a rear side of the vehicle; and/or
disposing one or more vehicle sensors on a left side of the vehicle; and/or
disposing one or more sensors on a right side of the vehicle.

The present invention further provides a vehicle sensor control system. The system includes:
an information collection module, configured to obtain vehicle driving information, where the vehicle driving information includes at least vehicle driving environment information;
an information decomposition module, configured to decompose the vehicle driving environment information into grid space, and determine a target grid based on the grid space; and
a vehicle sensor adjustment module, configured to obtain a perception capability of a vehicle sensor for the grid space, adjust the vehicle sensor based on the obtained perception capability, and control the target grid to be within a coverage area of the vehicle sensor.

The present invention further provides a vehicle. The control system described above is disposed on the vehicle.

As described above, the vehicle sensor control method and system provided in the present invention have the following beneficial effects: in the present invention, the angle adjustment and/or the position adjustment are or is performed on the sensor, so that mobility of the vehicle sensor can be improved, and an original coverage angle and coverage area of the vehicle sensor can be changed, thereby resolving the problem in the conventional technology that the coverage capability of the vehicle sensor is limited in the autonomous driving vehicle due to the fixed arrangement of the vehicle sensor. In addition, in the present invention, the arrangement form of the vehicle sensor is dynamically changed to optimize the autonomous driving perception capability thereof, so that the environment perception requirement of the autonomous driving function can be met in real time, and better user experience and more reliable driving safety can be achieved.

### BRIEF DESCRIPTION OF DRAWINGS

To describe the technical solutions in the embodiments of the present invention or in the conventional technology more clearly, the following briefly describes the accompanying drawings required for describing the embodiments or the conventional technology. Clearly, the accompanying drawings in the following description merely show some embodiments of the present invention, and a person of ordinary skill in the art can still derive other drawings from these accompanying drawings without creative efforts.
FIG. 1 is a schematic flowchart of a vehicle sensor control method according to an embodiment;
FIG. 2 is a schematic diagram of grid space according to an embodiment;
FIG. 3 is a schematic diagram showing coverage areas of vehicle sensors in a normal driving state of a vehicle according to an embodiment;
FIG. 4 is a schematic diagram showing coverage areas of vehicle sensors when an assisted driving function is enabled for a vehicle according to an embodiment;
FIG. 5 is a schematic diagram showing coverage areas of vehicle sensors when a lane changing or steering function is enabled for a vehicle according to an embodiment;
FIG. 6 is a schematic diagram showing coverage areas of vehicle sensors when a cruise control function is enabled for a vehicle according to an embodiment; and
FIG. 7 is a schematic diagram of a system structure of a vehicle sensor control system according to an embodiment.

### DESCRIPTION OF EMBODIMENTS

The following describes implementations of the present invention by using specific examples. A person skilled in the art may easily understand other advantages and effects of the present invention by using the content disclosed in this specification. The present invention may be further implemented or applied in other different specific implementations. Various details in this specification may also be modified or altered based on different viewpoints and applications without departing from the spirit of the present invention. It should be noted that the following embodiments and features in the embodiments may be mutually combined when there are no conflicts.

It should be noted that the figures provided in the following embodiments merely schematically describe the basic concept of the present invention. Therefore, the figures display only components related to the present invention instead of being drawn based on a quantity, shapes, and sizes of components in actual implementation. Forms, the quantity, and a ratio of the components in actual implementation of the figures may be randomly changed, and a component layout form of the figures may also be more complex.

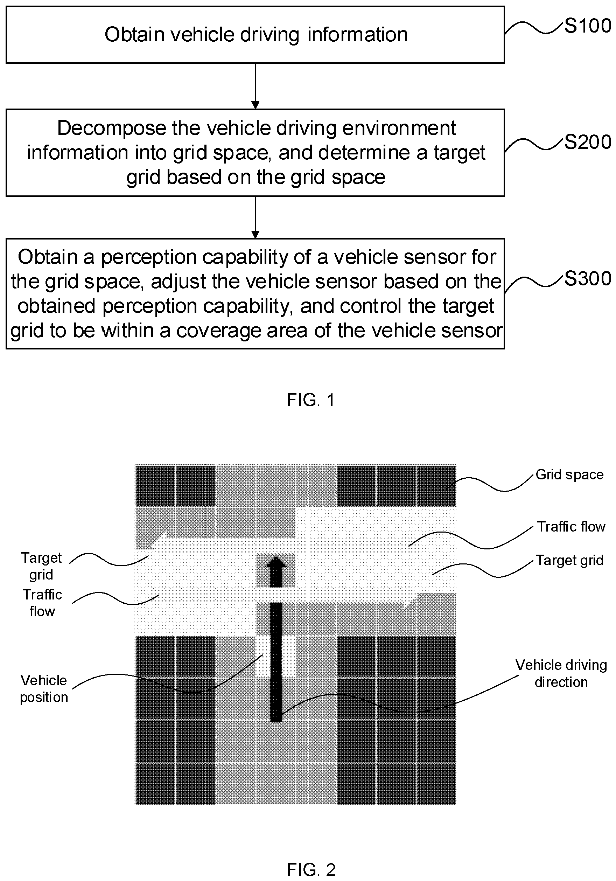

As shown in FIG. 1, the present invention provides a vehicle sensor control method. The method includes the following steps.

S100: Obtain vehicle driving information, where the vehicle driving information includes at least vehicle driving environment information.

S200: Decompose the vehicle driving environment information into grid space, and determine a target grid based on the grid space.

S300: Obtain a perception capability of a vehicle sensor for the grid space, adjust the vehicle sensor based on the obtained perception capability, and control the target grid to be within a coverage area of the vehicle sensor.

In this method, the target grid is a grid that a vehicle needs to perceive, and perception capabilities of and differences between different vehicle sensors for the grid space are tested and determined in advance in a design phase of the vehicle sensors. It can be learned that in this method, an angle adjustment and/or a position adjustment are or is performed on the sensor, so that the mobility thereof can be improved, and an original coverage angle and coverage area of the vehicle sensor can be changed, thereby resolving the problem in the conventional technology that the coverage capability of the vehicle sensor is limited in the autonomous driving vehicle due to a fixed arrangement thereof. In the meantime, in this method, the arrangement form of the vehicle sensor is dynamically changed to optimize the autonomous driving perception capability, so that the environment perception requirement of the autonomous driving function can be met in real time, and better user experience and more reliable driving safety can be achieved.

Based on the foregoing descriptions, in an example embodiment, the vehicle driving information further includes vehicle positioning information; and a process of determining the vehicle driving environment information includes: obtaining the vehicle positioning information; generating a vehicle driving trajectory based on the vehicle positioning information; and obtaining map data and determining the vehicle driving environment information based on the map data and the vehicle driving trajectory. For example, global navigation satellite system (GNSS) positioning information of a current vehicle is first obtained, and then a driving trajectory of the current vehicle is generated based on the obtained GNSS positioning information. Then high-precision map data is obtained, and the obtained high-precision map data is combined with the driving trajectory of the current vehicle to obtain driving environment information of the current vehicle. In this embodiment, the high-precision map data may be map data whose precision reaches a decimeter level, or may be map data that can provide road-level navigation information and lane-level navigation information. The vehicle driving environment information in this embodiment may be peripheral space information of the vehicle.

Based on the foregoing descriptions, in an examplary embodiment, a process of determining the target grid based on the grid space includes: after the vehicle driving environment information is decomposed into the grid space, obtaining a driving direction of the current vehicle, and obtaining a traffic flow formed when another vehicle approaches the current vehicle; determining a risk source direction of the current vehicle based on the traffic flow and the driving direction of the current vehicle; predicting a probability that the another vehicle collides with the current vehicle and a collision area thereof based on the risk source direction; and selecting, from the grid space, a grid corresponding to the predicted collision area as the target grid. For example, as shown in FIG. 2, in this embodiment, the driving environment information of the current vehicle is first decomposed into grid space including a plurality of grids, and then the driving direction of the current vehicle is obtained and the traffic flow formed when the another vehicle approaches the current vehicle is obtained. Then the risk source direction of the current vehicle is determined based on the obtained traffic flow and the driving direction of the current vehicle, and the probability that the another vehicle collides with the current vehicle and the collision area thereof are predicted based on the risk source direction. Then the grid corresponding to the predicted collision area is selected from the grid space as a grid that the vehicle sensor must perceive, namely, the target grid. In this embodiment, the risk source direction is determined based on the driving direction of the current vehicle. A direction to which a vehicle head of the current vehicle points is defined as 0°, and a direction obtained when the vehicle head rotates by one circle in a clockwise direction is defined as 360°. If there is a traffic flow moving toward the position of the current vehicle in a certain direction, the direction is the risk source direction.

Based on the foregoing descriptions, in an examplary embodiment, the adjustment to the vehicle sensor includes an angle adjustment and/or a position adjustment. Specifically, when the position adjustment is performed on the vehicle sensor, the method includes: moving the vehicle sensor up or down, moving the vehicle sensor left or right, and/or moving the vehicle sensor forward or backward, so as to adjust an original spatial position of the vehicle sensor and a coverage area thereof corresponding to the original spatial position. When the angle adjustment is performed on the vehicle sensor, the method includes: performing a clockwise or counterclockwise rotation on the vehicle sensor to adjust the original angle and the coverage area thereof corresponding to the original angle.

For example, in this embodiment, the vehicle sensor may be moved up or down, left or right, and/or forward or backward by using a mechanical structure, so that the original spatial position of the vehicle sensor and the coverage area corresponding to the original spatial position are adjusted. For example, when the vehicle sensor is fastened to the vehicle by using a support, the support may be moved up or down, left or right, and/or forward or backward, which is equivalent to indirectly adjusting the vehicle sensor, to change the original spatial position and the coverage area of the vehicle sensor corresponding to the original spatial position. It can be learned that in this example, the position adjustment is performed on the sensor, so that the mobility of the vehicle sensor can be improved and the original coverage angle and coverage area thereof can be changed, thereby resolving the problem in the conventional technology that the coverage capability of the vehicle sensor is limited in the autonomous driving vehicle due to the fixed arrangement of the vehicle sensor.

For another example, in this embodiment, a rotation control may alternatively be performed on the vehicle sensor by using a mechanical structure, to change the original angle and the coverage area of the vehicle sensor corresponding to the original angle. Rotation directions may include a clockwise rotation and a counterclockwise rotation. In this example, the clockwise rotation is defined as a positive direction, and the counterclockwise rotation is defined as a negative direction. If a rotation angle is "+15°", it indicates that the vehicle sensor is controlled to rotate by 15° in a clockwise direction. It can be learned that in this example, the angle adjustment is performed on the sensor, so that the mobility of the vehicle sensor can be improved, and the original coverage angle and coverage area of the vehicle sensor can be changed, thereby resolving the problem in the conventional technology that the coverage capability of the vehicle sensor is limited in the autonomous driving vehicle due to the fixed arrangement of the vehicle sensor.

In an examplary embodiment, when the vehicle driving information is obtained, the method further includes: obtaining a vehicle function on/off state, and turning on or off one or more vehicle sensors disposed at different positions of the vehicle based on a result of the vehicle function on/off state. The vehicle function includes at least one of the following: an autonomous driving function, an assisted driving function, a lane changing function, a steering function, and a cruise control function.

In some examplary embodiments, the vehicle sensor in this method may be disposed on a front side, a rear side, a left side, and/or a right side of the vehicle. For example, one or more vehicle sensors may be disposed on the front side of the vehicle. For another example, one or more vehicle sensors may be disposed on the rear side of the vehicle. For another example, one or more vehicle sensors may be disposed on the left side of the vehicle. For another example, one or more sensors may be disposed on the right side of the vehicle. The vehicle sensor in this method may be disposed based on an actual requirement. For example, an infrared sensor, a distance sensor, or the like may be disposed.

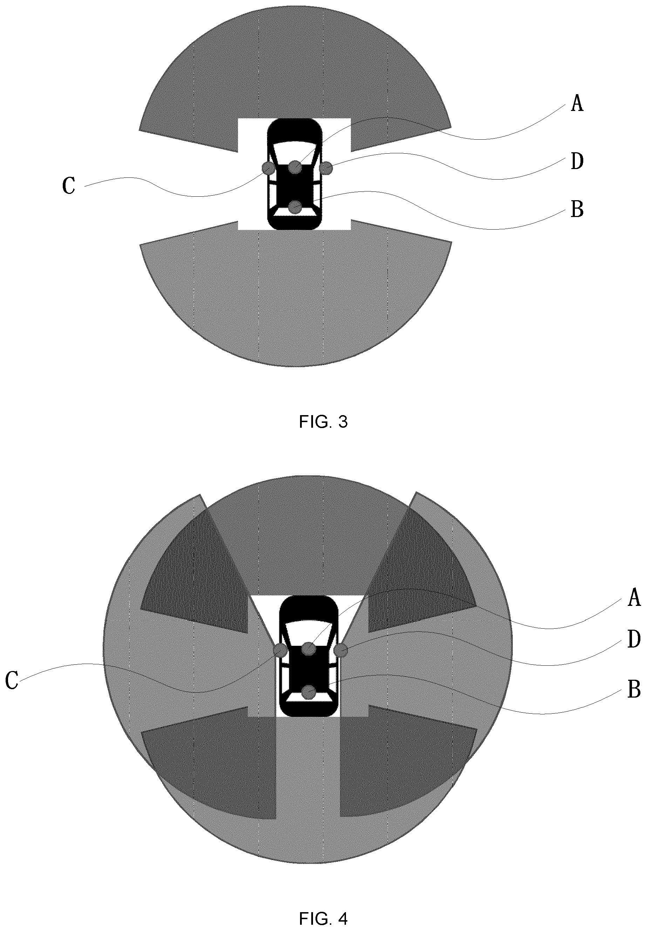

In a specific embodiment, a vehicle sensor A is disposed on a front side of a vehicle M, a vehicle sensor B is disposed on a rear side of the vehicle M, a vehicle sensor C is disposed on a left side of the vehicle M, and a vehicle sensor D is disposed on a right side of the vehicle M, respectively. As shown in FIG. 3, when the vehicle M is in a normal driving state, only the vehicle sensor A on the front side of the vehicle M and the vehicle sensor B on the rear side of the vehicle M are in a working state, and the vehicle sensor C on the left side of the vehicle M and the vehicle sensor D on the right side of the vehicle M are in a folded state. In this case, coverage areas of the vehicle sensors in the vehicle M are the coverage areas corresponding to the vehicle sensor A and the vehicle sensor B in an unadjusted state.

In another specific embodiment, a vehicle sensor A is disposed on a front side of a vehicle N, a vehicle sensor B is disposed on a rear side of the vehicle N, a vehicle sensor C is disposed on a left side of the vehicle N, and a vehicle sensor D is disposed on a right side of the vehicle N, respectively. When the assisted driving function is enabled for the vehicle N, the vehicle needs to cover a peripheral area as much as possible. In this case, the vehicle sensor C on the left side of the vehicle N and the vehicle sensor D on the right side of the vehicle N are expanded outwardly toward the corresponding side. As shown in FIG. 4, when the assisted driving function is enabled for the vehicle N, the vehicle sensor A on the front side of the vehicle N, the vehicle sensor B on the rear side of the vehicle N, the vehicle sensor C on the left side of the vehicle N, and the vehicle sensor D on the right side of the vehicle N are all in a working state. In this case, the coverage areas of the vehicle sensors in the vehicle N are those corresponding to the vehicle sensor A, the vehicle sensor B, the vehicle sensor C, and the vehicle sensor D in an unadjusted state.

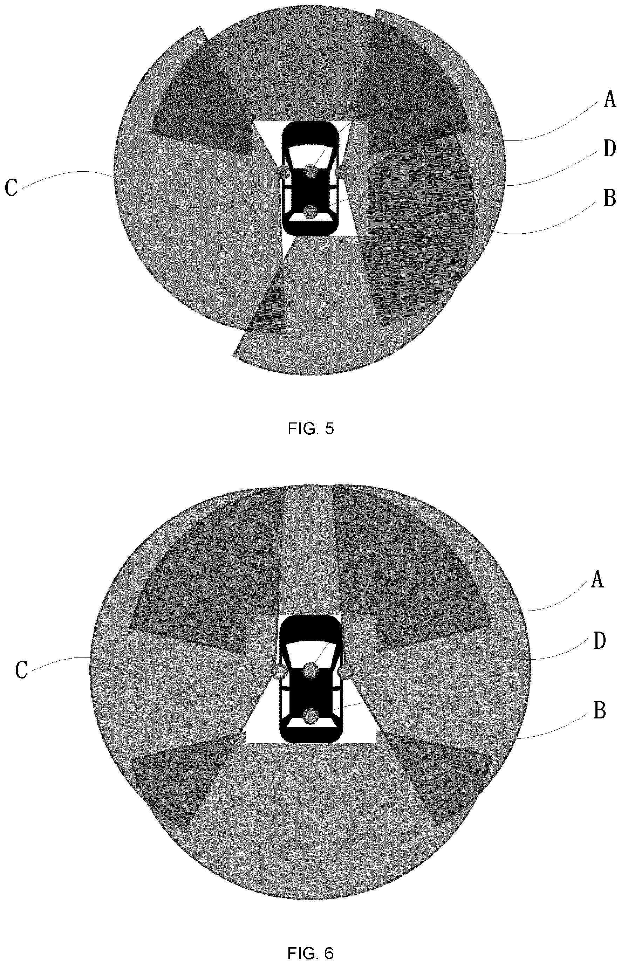

In another specific embodiment, a vehicle sensor A is disposed on a front side of a vehicle X, a vehicle sensor B is disposed on a rear side of the vehicle X, a vehicle sensor C is disposed on a left side of the vehicle X, and a vehicle sensor D is disposed on a right side of the vehicle X, respectively. As shown in FIG. 5, when the lane changing or steering function is enabled for the vehicle X, the vehicle sensor A on the front side of the vehicle X, the vehicle sensor B on the rear side of the vehicle X, the vehicle sensor C on the left side of the vehicle X, and the vehicle sensor D on the right side of the vehicle X all are in a working state. When the lane changing or steering function is enabled for the vehicle X, the perception redundancy on one side of the vehicle needs to be enhanced by rotating the sensor. Therefore, in this embodiment, the vehicle sensor B on the rear side of the vehicle X and the vehicle sensor D on the right side of the vehicle X are rotated counterclockwise to adjust angles of the vehicle sensor B and the vehicle sensor D, to resolve the area coverage problem when the lane changing or steering function is enabled for the vehicle X. In this case, the coverage areas of the vehicle sensors in the vehicle X are those corresponding to the vehicle sensor A and the vehicle sensor C in an unadjusted state and those corresponding to the vehicle sensor B and the vehicle sensor D after the counterclockwise angle adjustments are performed.

In another specific embodiment, a vehicle sensor A is disposed on a front side of a vehicle Y, a vehicle sensor B is disposed on a rear side of the vehicle Y, a vehicle sensor C is disposed on a left side of the vehicle Y, and a vehicle sensor D is disposed on a right side of the vehicle Y, respectively. As shown in FIG. 6, when the cruise control function is enabled for the vehicle Y, the vehicle sensor A on the front side of the vehicle Y, the vehicle sensor B on the rear side of the vehicle Y, the vehicle sensor C on the left side of the vehicle Y, and the vehicle sensor D on the right side of the vehicle Y are all in a working state. When the cruise control function is enabled for the vehicle Y, the vehicle needs to have richer front perception information. Therefore, in this embodiment, counterclockwise angle adjustments are performed on the vehicle sensor C on the left side of the vehicle Y and the vehicle sensor D on the right side of the vehicle Y, which is equivalent to flipping the vehicle sensor C and the vehicle sensor D forward to enhance the front perception. In this case, the coverage areas of the vehicle sensors in the vehicle Y are those corresponding to the vehicle sensor A and the vehicle sensor B in an unadjusted state and those corresponding to the vehicle sensor C and the vehicle sensor D after the counterclockwise angle adjustments are performed.

In conclusion, according to the vehicle sensor control method provided in the present invention, the angle adjustment and/or the position adjustment are or is performed on the corresponding sensors, so that the mobility of the vehicle sensor can be improved, and the original coverage angle and the coverage area of the sensors can be changed, thereby resolving the problem in the conventional technology that the coverage capability of the vehicle sensors is limited in the autonomous driving vehicle due to a fixed arrangement of the vehicle sensor. In addition, in the present invention, the arrangement form of the vehicle sensors is dynamically changed to optimize the autonomous driving perception capability thereof, so that the environment perception requirement of the autonomous driving function can be met in real time, and better user experience and more reliable driving safety can be achieved.

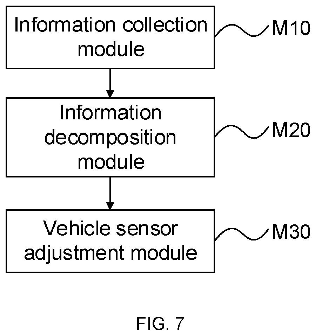

As shown in FIG. 7, the present invention further provides a vehicle sensor control system. The system includes:
an information collection module M10, configured to obtain vehicle driving information, where the vehicle driving information includes at least vehicle driving environment information;
an information decomposition module M20, configured to decompose the vehicle driving environment information into grid space, and determine a target grid based on the grid space; and
a vehicle sensor adjustment module M30, configured to obtain a perception capability of a vehicle sensor for the grid space, adjust the vehicle sensor based on the obtained perception capability, and control the target grid to be within the coverage area of the vehicle sensor.

In this system, the target grid is a grid that a vehicle needs to perceive, and perception capabilities of and differences between different vehicle sensors for the grid space are tested and determined in advance in a design phase of the vehicle sensors. It can be learned that in this system, the angle adjustment and/or the position adjustment are or is performed on the corresponding vehicle sensor(s), so that the mobility of the vehicle sensor(s) can be improved, and the original coverage angle and the coverage area thereof can be changed, thereby resolving the problem in the conventional technology that the coverage capability of the vehicle sensor(s) is limited in the autonomous driving vehicle due to the fixed arrangement of the vehicle sensor(s). In addition, in this system, the sensor arrangement form is dynamically changed to optimize the autonomous driving perception capability thereof, so that an environment perception requirement of the autonomous driving function can be met in real time, and better user experience and more reliable driving safety can be achieved.

Based on the foregoing descriptions, in an example embodiment, the vehicle driving information further includes vehicle positioning information; and a process of creating the vehicle driving environment information includes: obtaining the vehicle positioning information; generating a vehicle driving trajectory based on the vehicle positioning information; and obtaining map data, and determining the vehicle driving environment information based on the map data and the vehicle driving trajectory. For example, global navigation satellite system (GNSS) positioning information of a current vehicle is first obtained, and then a driving trajectory of the current vehicle is generated based on the obtained GNSS positioning information. Then high-precision map data is obtained, and the obtained high-precision map data is combined with the driving trajectory of the current vehicle to determine the driving environment information of the current vehicle. In this embodiment, the high-precision map data may be map data whose precision reaches a decimeter level, or may be map data that can provide road-level navigation information and lane-level navigation information. The vehicle driving environment information in this embodiment may be peripheral space information of the vehicle.

Based on the foregoing descriptions, in an examplary embodiment, a process of determining the target grid based on the grid space includes: after the vehicle driving environment information is decomposed into the grid space, obtaining a driving direction of the current vehicle, and obtaining a traffic flow formed when another vehicle approaches the current vehicle; determining a risk source direction of the current vehicle based on the traffic flow and the driving direction of the current vehicle; predicting a probability that the another vehicle collides with the current vehicle and a collision area thereof based on the risk source direction; and selecting, from the grid space, a grid corresponding to the predicted collision area as the target grid. For example, as shown in FIG. 2, in this embodiment, the driving environment information of the current vehicle is first decomposed into grid space including a plurality of grids, and then the driving direction of the current vehicle is obtained and the traffic flow formed when the another vehicle approaches the current vehicle is obtained. Then the risk source direction of the current vehicle is determined based on the obtained traffic flow and the driving direction of the current vehicle, and the probability that the another vehicle collides with the current vehicle and the collision area are predicted based on the risk source direction. Then the grid corresponding to the predicted collision area is selected, from the grid space, as a grid that the vehicle sensor must perceive, namely, the target grid. In this embodiment, the risk source direction is determined based on the driving direction of the current vehicle. A direction to which a vehicle head of the current vehicle points is defined as 0°, and a direction obtained when the vehicle head rotates by one circle in a clockwise direction is defined as 360°. If there is a traffic flow moving toward a position of the current vehicle in a certain direction, the direction is the risk source direction.

Based on the foregoing descriptions, in an examplary embodiment, the adjustment to the vehicle sensor includes an angle adjustment and/or a position adjustment. Specifically, when the position adjustment is performed on the vehicle sensor, the method includes: moving the vehicle sensor up or down, moving the vehicle sensor left or right, and/or moving the vehicle sensor forward or backward, so as to adjust an original spatial position of the vehicle sensor and a coverage area corresponding to the original spatial position. When the angle adjustment is performed on the vehicle sensor, the method includes: performing a clockwise or counterclockwise rotation on the vehicle sensor to adjust the original angle of the vehicle sensor and the coverage area corresponding to the original angle.

For example, in this embodiment, the vehicle sensor may be moved up or down, left or right, and/or forward or backward by using a mechanical structure, so that the original spatial position of the vehicle sensor and the coverage area corresponding to the original spatial position are adjusted. For example, when the vehicle sensor is fastened to the vehicle by using a support, the support may be moved up or down, left or right, and/or forward or backward, which is equivalent to indirectly adjusting the vehicle sensor to change the original spatial position thereof and the coverage area corresponding to the original spatial position. It can be learned that in this example, the position adjustment is performed on the sensor so that the mobility of the vehicle sensor can be improved, and the original coverage angle and the coverage area of the vehicle sensor can be changed, thereby resolving the problem in the conventional technology that the coverage capability of the vehicle sensor is limited in the autonomous driving vehicle due to the fixed arrangement of the vehicle sensor.

For another example, in this embodiment, rotation control may alternatively be performed on the vehicle sensor by using a mechanical structure, to change the original angle of the vehicle sensor and the coverage area corresponding to the original angle. A rotation direction includes a clockwise rotation and a counterclockwise rotation. In this example, the clockwise rotation is defined as a positive direction, and the counterclockwise rotation is defined as a negative direction. If a rotation angle is "+15°", it indicates that the vehicle sensor is controlled to rotate by 15° in a clockwise direction. It can be learned that in this example, the angle adjustment is performed on the sensor, so that the mobility of the vehicle sensor can be improved, and the original coverage angle and the coverage area of the vehicle sensor can be changed, thereby resolving the problem in the conventional technology that the coverage capability of the vehicle sensor is limited in the autonomous driving vehicle due to the fixed arrangement of the vehicle sensor.

In an examplary embodiment, when the vehicle driving information is obtained, the method further includes: obtaining a vehicle function on/off state, and turning on or off one or more vehicle sensors disposed at different positions of the vehicle based on a result of the vehicle function on/off state. The vehicle function includes at least one of the following: an autonomous driving function, an assisted driving function, a lane changing function, a steering function, and a cruise control function.

In some examplary embodiments, the vehicle sensor of this system may be disposed on a front side, a rear side, a left side, and/or a right side of the vehicle. For example, one or more vehicle sensors may be disposed on the front side of the vehicle. For another example, one or more vehicle sensors may be disposed on the rear side of the vehicle. For another example, one or more vehicle sensors may be disposed on the left side of the vehicle. For another example, one or more sensors may be disposed on the right side of the vehicle. The vehicle sensor in this system may be set based on an actual requirement. For example, an infrared sensor, a distance sensor, or the like may be disposed.

In a specific embodiment, a vehicle sensor A is disposed on a front side of a vehicle M, a vehicle sensor B is disposed on a rear side of the vehicle M, a vehicle sensor C is disposed on a left side of the vehicle M, and a vehicle sensor D is disposed on a right side of the vehicle M, respectively. As shown in FIG. 3, when the vehicle M is in a normal driving state, only the vehicle sensor A on the front side of the vehicle M and the vehicle sensor B on the rear side of the vehicle M are in a working state, while the vehicle sensor C on the left side of the vehicle M and the vehicle sensor D on the right side of the vehicle M are in a folded state. In this case, the coverage areas of the vehicle sensors in the vehicle M are those corresponding to the vehicle sensor A and the vehicle sensor B in an unadjusted state.

In another specific embodiment, a vehicle sensor A is disposed on a front side of a vehicle N, a vehicle sensor B is disposed on a rear side of the vehicle N, a vehicle sensor C is disposed on a left side of the vehicle N, and a vehicle sensor D is disposed on a right side of the vehicle N, respectively. When the assisted driving function is enabled for the vehicle N, the vehicle sensors need to cover the peripheral area around the vehicle as much as possible. In this case, the vehicle sensor C on the left side of the vehicle N and the vehicle sensor D on the right side of the vehicle N are expanded outwardly toward the side thereof. As shown in FIG. 4, when the assisted driving function is enabled for the vehicle N, the vehicle sensor A on the front side of the vehicle N, the vehicle sensor B on the rear side of the vehicle N, the vehicle sensor C on the left side of the vehicle N, and the vehicle sensor D on the right side of the vehicle N all are in a working state. In this case, the coverage areas of the vehicle sensors in the vehicle N are those corresponding to the vehicle sensor A, the vehicle sensor B, the vehicle sensor C, and the vehicle sensor D in an unadjusted state.

In another specific embodiment, a vehicle sensor A is disposed on a front side of a vehicle X, a vehicle sensor B is disposed on a rear side of the vehicle X, a vehicle sensor C is disposed on a left side of the vehicle X, and a vehicle sensor D is disposed on a right side of the vehicle X, respectively. As shown in FIG. 5, when the lane changing or steering function is enabled for the vehicle X, the vehicle sensor A on the front side of the vehicle X, the vehicle sensor B on the rear side of the vehicle X, the vehicle sensor C on the left side of the vehicle X, and the vehicle sensor D on the right side of the vehicle X are all in a working state. When the lane changing or steering function is enabled for the vehicle X, the perception redundancy on one side of the vehicle needs to be enhanced by rotating the sensor. Therefore, in this embodiment, the vehicle sensor B on the rear side of the vehicle X and the vehicle sensor D on the right side of the vehicle X are rotated counterclockwise to adjust angles of the vehicle sensor B and the vehicle sensor D, to resolve the area coverage problem when the lane changing or steering function is enabled for the vehicle X. In this case, the coverage areas of the vehicle sensors in the vehicle X are those corresponding to the vehicle sensor A and the vehicle sensor C in an unadjusted state and those corresponding to the vehicle sensor B and the vehicle sensor D after the counterclockwise angle adjustments are performed.

In another specific embodiment, a vehicle sensor A is disposed on a front side of a vehicle Y, a vehicle sensor B is disposed on a rear side of the vehicle Y, a vehicle sensor C is disposed on a left side of the vehicle Y, and a vehicle sensor D is disposed on a right side of the vehicle Y, respectively. As shown in FIG. 6, when the cruise control function is enabled for the vehicle Y, the vehicle sensor A on the front side of the vehicle Y, the vehicle sensor B on the rear side of the vehicle Y, the vehicle sensor C on the left side of the vehicle Y, and the vehicle sensor D on the right side of the vehicle Y all are in a working state. When the cruise control function is enabled for the vehicle Y, the vehicle needs to have richer front perception information. Therefore, in this embodiment, counterclockwise angle adjustments are performed on the vehicle sensor C on the left side of the vehicle Y and the vehicle sensor D on the right side of the vehicle Y, which is equivalent to flipping the vehicle sensor C and the vehicle sensor D forward to enhance the front perception thereof. In this case, the coverage areas of the vehicle sensors in the vehicle Y are those corresponding to the vehicle sensor A and the vehicle sensor B in an unadjusted state and those corresponding to the vehicle sensor C and the vehicle sensor D after the counterclockwise angle adjustments are performed.

In conclusion, the present invention provides the vehicle sensor control system, in which the angle adjustment and/or the position adjustment are or is performed on the corresponding sensor(s), so that the mobility of the vehicle sensor(s) can be improved, and the original coverage angle and the coverage area thereof can be changed, thereby resolving the problem in the conventional technology that the coverage capability of the corresponding vehicle sensor(s) is limited in the autonomous driving vehicle due to the fixed arrangement of the vehicle sensor(s). In the meantime, in the present invention, the arrangement form of the vehicle sensor(s) is dynamically changed to optimize the autonomous driving perception capability, so that the environment perception requirement of the autonomous driving function can be met in real time, and better user experience and more reliable driving safety can be achieved.

In an examplary embodiment, the present invention further provides a vehicle. Any one of the vehicle sensor control systems described above is set on the vehicle. Functions and technical effects of the vehicle may be referred to the above-described control system. Details are not described herein repeatedly.

The foregoing embodiments merely illustrate principles and functions of the present invention, but are not intended to limit the present invention. Any person skilled in the art may modify or alter the foregoing embodiments without departing from the spirit and scope of the present invention. Therefore, all equivalent modifications or alterations completed by a person of ordinary skill in the art without departing from the spirit and technical ideas disclosed in the present invention shall still be covered by the claims of the present invention.

## Claims

1. A vehicle sensor control method, wherein the method comprises the following steps:
obtaining vehicle driving information, wherein the vehicle driving information comprises at least vehicle driving environment information;
decomposing the vehicle driving environment information into grid space, and determining a target grid based on the grid space; and
obtaining a perception capability of a vehicle sensor for the grid space, adjusting the vehicle sensor based on the obtained perception capability, and controlling the target grid to be within a coverage area of the vehicle sensor.

2. The vehicle sensor control method according to claim 1, wherein the vehicle driving information further comprises vehicle positioning information, and a process of determining the vehicle driving environment information comprises:
obtaining the vehicle positioning information;
generating a vehicle driving trajectory based on the vehicle positioning information; and
obtaining map data, and the vehicle driving environment information based on the map data and the vehicle driving trajectory.

3. The vehicle sensor control method according to claim 1, wherein a process of determining the target grid based on the grid space comprises:
after the vehicle driving environment information is decomposed into the grid space, obtaining a driving direction of a current vehicle, and obtaining a traffic flow formed when another vehicle approaches the current vehicle;
determining a risk source direction of the current vehicle based on the traffic flow and the driving direction of the current vehicle;
predicting a probability that the another vehicle collides with the current vehicle and a collision area based on the risk source direction; and
selecting, from the grid space, a grid corresponding to the predicted collision area as the target grid.

4. The vehicle sensor control method according to any one of claims 1 to 3, wherein the adjustment to the vehicle sensor comprises an angle adjustment and/or a position adjustment.

5. The vehicle sensor control method according to claim 4, wherein when the position adjustment is performed on the vehicle sensor, the method comprises: moving the vehicle sensor up or down, moving the vehicle sensor left or right, and/or moving the vehicle sensor forward or backward, to adjust an original spatial position of the vehicle sensor and a corresponding coverage area; and
when the angle adjustment is performed on the vehicle sensor, the method comprises: performing a clockwise or counterclockwise rotation on the vehicle sensor to adjust an original angle of the vehicle sensor and a corresponding coverage area.

6. The vehicle sensor control method according to claim 1, wherein when obtaining the vehicle driving information, the method further comprises: obtaining a vehicle function on/off state, and turning on or off one or more vehicle sensors disposed at different positions of the vehicle based on a result of the vehicle function on/off state,, wherein the vehicle function comprises at least one of the following: an autonomous driving function, an assisted driving function, a lane changing function, a steering function, and a cruise control function.

7. The vehicle sensor control method according to claim 1 or 6, wherein the method further comprises:
disposing one or more vehicle sensors on a front side of the vehicle; and/or
disposing one or more vehicle sensors on a rear side of the vehicle; and/or
disposing one or more vehicle sensors on a left side of the vehicle; and/or
disposing one or more sensors on a right side of the vehicle.

8. A vehicle sensor control system, wherein the system comprises:
an information collection module, configured to obtain vehicle driving information, wherein the vehicle driving information comprises at least vehicle driving environment information;
an information decomposition module, configured to decompose the vehicle driving environment information into grid space, and determine a target grid based on the grid space; and
a vehicle sensor adjustment module, configured to obtain a perception capability of a vehicle sensor for the grid space, adjust the vehicle sensor based on the obtained perception capability, and control the target grid to be within a coverage area of the vehicle sensor.

9. A vehicle, wherein the control system according to claim 8 is disposed on the vehicle.
